# EUROPEAN PATENT APPLICATION

(11) **EP 3 536 434 A1**
(43) Date of publication of application: **11.09.2019**
(21) Application number: 18160082.6
(22) Date of filing: 06.03.2018
(51) Int. Cl.: B23K 9/20, B08B 7/00, B23K 9/235

(54) **PROTECTIVE GAS MOUTHPIECE AND JOINING DEVICE FOR JOINING A STUD TO A WORKPIECE COMPRISING THE SAME**

(71) Applicant: Newfrey LLC, New Britain, CT 06053 (US)
(72) Inventor: REIS, Christian, 35394 Gießen (DE)
(74) Representative: SBD IPAdmin

(57) **Abstract**

The present application relates to a joining device (10) comprising a gas protective mouthpiece (26) and protective gas mouthpiece (26) for a joining device (10) adapted to carry out a joining process of a stud to a workpiece comprising - a main body (28) having an opening (34) extending along a stud axis (X) and adapted to receive a stud, and a supporting surface (36) adapted to be arranged on the workpiece (36); wherein the main body (28) delimits an internal space (40), into which a protective gas can be introduced for carrying out the joining process when the supporting surface rests on the workpiece, a channel (30) adapted to feed the protective gas from a feed unit into the internal space. The protective gas mouthpiece further comprises a cleaning unit (32) having a plasma torch (48) and adapted to locally supply a plasma jet (50) on the surface of the workpiece, such that the plasma jet is adapted to clean the surface of the workpiece before the joining process, the cleaning unit (32) being attached to the main body (28) and connected to the internal space (40).

## Description

The present invention relates to a protective gas mouthpiece for a joining device adapted to carry out a joining process of a stud to a workpiece. In addition the present invention is directed to a joining device for joining a stud to a workpiece. The invention is used in particular for stud welding.

In stud welding, studs, which are provided, for example, with a thread, are joined or welded to a workpiece, such as for example a vehicle body panel. A significant field of application is in the car industry where various components are connected to one another, for example vehicle body parts, anchors for clips are connected to the chassis, etc., by means of studs which are provided with a thread.

Stud welding is a form of arc welding which is defined, inter alia, by the fact that very short welding processes are carried out with strong currents. During stud welding it is necessary to coordinate electric switching processes with mechanical movements of the stud in order to be able to handle the very rapid melting and solidification processes. Various resources are used to improve the welding process and the result. The use of a protective gas is one of the resources.

Typically, studs are fastened (for example welded) to a workpiece or part using a protective gas mouthpiece (also called nozzle) that contacts and/or seals against the workpiece or part to enclose the stud or fastening area within a sealed chamber (also called internal space) containing protective welding gas, such as argon. To be clear, notably for a welding process, this contact or sealing occurs during at least the pilot arc and main arc generating operations (not just the final stud plunging operation). The protective gas mouthpiece can thus adequately retain the protective gas during drawn arc stud welding, for example.

The workpieces onto which the studs are fastened or joined are frequently contaminated, for example by solid lubricant and/or deep-drawing oil, in particular as residue from previously carried out cold working processes. Such contamination(s) may damage the joining resulting from the joining process. It is therefore a need to reduce the contamination of the workpiece prior joining.

It is known from the prior art to conduct a cleaning process prior to the actual joining process.

A known method is to generate, prior to the generating of the welding arc at a relatively high current intensity, a cleaning arc, which has a lower current intensity, between the workpiece and the fastening element to be welded on. Thus, the welding surfaces located opposite each other, as a rule, are not yet melted. In this connection, on account of the emission of electrons, the component with negative polarity experiences a certain cleaning temperature rise which results in the combustion of the wetting substances. The residue of said combustion process is then deposited on the component with positive polarity if it does not immediately evaporate. By frequently changing polarity, the surfaces can consequently be cleaned well.

However, such method cannot be performed for all workpieces, and notably cannot be performed for thin workpieces with sheet thicknesses of, for example, less than or equal to 1 mm. Indeed, in such cases, there is a risk of frequent polarity changes leading to "root penetration", where the workpiece in the region of the welding surface is melted not only on the surface but directly through such that a hole is generated at this position and a stud weld connection is no longer possible.

Document EP2879831 discloses a cleaning method with the use of a cleaning electrode. The joining device comprising the cleaning electrode may be cumbersome in some situations. The integration of the cleaning electrode can be difficult and can lead to some obstruction

It is hence an object of the present invention to at least alleviate the aforementioned shortcomings.

More particularly, it is an object of the present invention to provide a gas protective mouthpiece and a joining device which ensure a good joining quality under all conditions by making possible to pre-clean the surfaces of any workpiece without time-consuming cleaning steps and with a compact design.

To this end, the present invention is directed to a protective gas mouthpiece for a joining device adapted to carry out a joining process of a stud to a workpiece comprising:
- a main body having:
- an opening extending along a stud axis and adapted to receive a stud, and
- a supporting surface adapted to be arranged on the workpiece;
wherein the main body delimits an internal space, into which a protective gas can be introduced for carrying out the joining process when the supporting surface rests on the workpiece,
- a channel adapted to feed the protective gas from a feed unit into the internal space,

And wherein the protective gas mouthpiece further comprises a cleaning unit having a plasma torch and adapted to locally supply a plasma jet on the surface of the workpiece, such that the plasma jet is adapted to clean the surface of the workpiece before the joining process, the cleaning unit being attached to the main body and connected to the internal space.

The use of a plasma torch to clean the surface allows a good cleaning of workpieces like vehicle body panel. The integration of the cleaning device with the plasma torch in the mouthpiece allows to perform a compact joining device able to perform the cleaning step and the joining step one after the other without the need for the joining head to move between the two steps. Moreover, the integration of the cleaning device in the mouthpiece allows to direct the plasma jet exactly toward the surface on which the joining process is to be carried out, decreasing the risk of inexact motion of the joining head. A precise cleaning is thus realized exactly on the needed surface and no further action have to be taken (such as measurement of the clean surface, position of the clean surface ...). The manufacturing time is thus reduced.

According to an embodiment, the plasma torch longitudinally extends along a torch axis, and wherein the torch axis is arranged inclined with regard to the stud axis. The inclination allows to avoid any obstruction by the cleaning unit during the joining process.

According to an embodiment, the angle between the plasma axis and the stud axis is between 30 and 60 degrees. More particularly a 40 degrees angle may be implemented. Such angles allows a focused plasma jet to realize the cleaning of the surface needed without obstructing the joining process.

According to an embodiment, the plasma torch comprises a plurality of plasma tubes, each plasma tube having a plasma outlet tube including a plasma exit aperture, and wherein the plasma exit aperture is connected to the internal space delimited by the main body. The plurality of tubes allow to form a circular cleaning surface which exactly corresponds to a circular flange of the stud for example.

According to an embodiment, a manifold including a plurality of channel extending through the main body for feeding the protective gas into the internal space. The manifold may allow a good distribution and/or a quick feeding of the protective gas into the internal space.

The present invention is further directed to a joining device for joining a stud to a workpiece comprising:
- a stud holder operable for moving and holding the stud along a stud axis,
- a protective gas mouthpiece as described above, wherein the stud holder cooperates with the opening to drive the stud into the internal space to carry out a joining process.

Such joining device allows to realize the cleaning of the workpiece and the joining process one after the other without the need for an articulated arm or other to move between the two steps.

According to an embodiment, the joining device further comprises an electric welding power source, and wherein the stud is joined to the workpiece through arc welding.

According to an embodiment, the cleaning unit comprises a casing connected to the main body, and wherein the casing and the main body are used as a supporting foot. The supporting foot, realized by both the cleaning unit and the main body allows to exactly know the distance between the workpiece and the joining head (or stud) to realize a precise joining. The supporting foot is realized in this embodiment by existing foot, avoiding to provide further element which may be cumbersome. Thus, the joining device is compact without decreasing the joining properties.

According to an embodiment, the joining device further comprises a feed unit for feeding the protective gas into the internal space. The feed unit cooperate for instance with the channel.

According to an embodiment, the protective gas supplied by the feed unit is the same gas than the gas used in the cleaning unit. For instance a gas such as Argon can be used.

Other characteristics and advantages of the invention will readily appear from the following description of embodiments, provided as non-limitative examples, in reference to the accompanying drawings.

In the drawings:
Fig. 1 schematically shows a joining device for joining a stud to a workpiece with a stud holder and a protective gas mouthpiece;
Fig. 2 shows the protective gas mouthpiece of Fig. 1 with a main body defining an internal space and a cleaning unit having a plasma torch.

On the different figures, the same reference signs designate identical or similar elements.

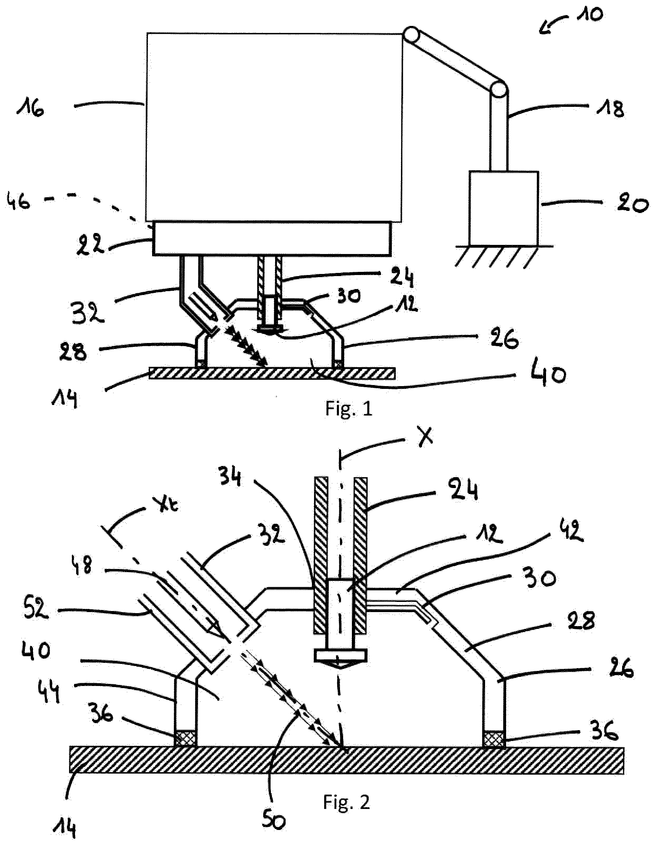

FIG. 1 shows a schematic representation of an embodiment of a joining device 10 according to the invention in the form of a stud welding apparatus.

The joining device 10 serves for example the purpose of welding fastening element, and more particularly studs 12, on workpieces 14 such as, for example, metal sheets. The stud and/or the workpiece can be produced from a metal material, for example steel or from a light metal material such as aluminium.

The stud 12, in a known manner, can have a flange on the underside of which a joining surface (more particularly a welding surface) is realized. A shank extends from the upper side of the flange. The flange and the shank are for example a one-piece element.

The joining device 10 comprises a joining head 16 which can be guided, for example by a robot. The robot can have an articulated arm 18 on which the joining head 16 can be mounted. The joining head is thus able to be moved three-dimensionally in space in an extensively free manner. The joining head 16 may be supplied with a power source and/or controlled by a control source 20. The control and power source 20 can form one unit with a supply device. In addition, the joining device 10 can have a stud supply device (not shown) which is arranged in a stationary manner and can be connected, for example, to the joining head 16 by means of a hose. As an alternative to this, the stud supply device can have a transfer station, from which the joining head 16 can fetch one or preferably a plurality of fastening elements which are then stored temporarily in a magazine of the joining head.

A joining tool 22 with a stud holder 24 is mounted on the joining head 16. The stud holder 24 is for example realized such that a stud 12 can be inserted into the stud holder and can be held securely during a joining process. The joining tool 22 may comprise additionally a drive device adapted to move the stud holder 24 along a stud axis in order to carry out the joining process (for example using the well-known lift-ignition method). In case of arc-welding, an electric welding power source is provided.

The joining tool 22 may be fastened rigidly on the joining head. For example, the joining tool is mounted on a tool carrier which is mounted on the joining head 16 so as to be rotatable about an axis of rotation, which is aligned at right angles to the stud axis.

The joining device 10 comprises a protective gas mouthpiece 26. The protective gas mouthpiece aims to be arranged around a joining element (for instance the stud 12 and stud holder 14) in order to allow a protective gas to be introduced in a chamber in order to improve the joining process.

The protective gas mouthpiece 26 comprises a main body 28, a channel 30 and a cleaning unit 32.

The main body 28 has an opening 34 extending along a stud axis X and is adapted to receive a stud holder 24.

The main body 28 further comprises a supporting surface 36 adapted to be arranged on the workpiece 14. The main body 28 defines or delimits an internal space 40, into which the stud 12 can be held during the joining process and into which a protective gas, for example Argon, can be introduced for carrying out the joining process, notably when the supporting surface rests again the workpiece.

More particularly, as depicted in Fig. 2, the gas protective mouthpiece comprises a base element 42, into which the opening is arranged. The opening 34 is designed to receive the stud holder and the stud. The opening 34 is for instance designed as a through opening.

At the portion of the base element 42 facing forwards in a connection direction the base member 42 has a mouth 44 (forming lateral walls extending in the direction of the workpiece for example). The mouth 44 comprises the supporting surface 36, which is arranged at a free end of the mouth 44 and can be placed on the workpiece surface in such a manner that the internal space 40 is closed. In other words, the supporting surface surrounds the internal space, and the mouth and the based member delimit the internal space.

Generally protective gas (also known as a shield gas or inerting gas) can be supplied to the internal space 40 by a feed unit 46 in different manners. One channel 30 (as depicted in the drawings) or a plurality of supply channels (for example a manifold) are constructed in the main body. The protective gas supply flow is introduced into the internal space, and for example focused in direction of the stud.

The gas protective mouthpiece 26 further comprises as described above the cleaning unit 32, which is part of the mouthpiece and connected to the main body 28, such that a motion of the main body is transferred to the cleaning unit. Thus, the cleaning unit 32 is fixedly secured to the main body 28. However, the cleaning unit may be disconnected from the main body, for example for maintenance. The cleaning unit is connected to the internal space. For instance, as illustrated in Fig. 1 or Fig. 2, the cleaning unit projects into the internal space.

The cleaning unit 32 comprises a plasma torch 48 (also called plasma jet torch). The plasma torch acts in the cleaning unit as a rich source of ions and free radicals and other highly reactive substances. These substances can be carried in a fast-moving gaseous stream to a focused surface on the workpiece comprising contamination. The stream has an effect directly on the contaminations (for example oil film) on the workpiece without the need to transfer a substantial amount of thermal energy into the workpiece surface, which may cause an appreciable rise in its temperature (and damage or decrease the properties of the joining process).

The cleaning unit 32 (and more particularly the plasma torch 48) is thus adapted to locally supply a plasma jet 50 on a surface of the workpiece, such that the plasma jet is adapted to clean the surface of the workpiece before the factual joining process.

The plasma torch 48 extends longitudinally along a torch axis Xt. The torch axis Xt is inclined with regard to the stud axis X. More particularly, the torch axis is inclined with regard to the stud axis to an angle between 30 and 60 degrees, more particularly to an angle between 30 and 50 degrees. For example, the torch axis is inclined to an angle of about 40 degrees.

The plasma torch 48 can have one or a plurality of plasma tubes. Each plasma tube can have a plasma outlet tube including a plasma exit aperture. The plasma exit aperture is connected to the internal space. More particularly, the plasma exit aperture can protrude in the internal space.

A single plasma tube oriented along the torch axis enables the formation of an oval clean surface on the workpiece surface. A plurality of plasma tubes may be arranged evenly distributed or not around the torch axis and may allow the formation of a circular clean surface.

Under "clean surface" it is to understand the surface of the workpiece 14 onto which a plasma jet is applied and which clean the contamination(s) on the surface before the joining (or welding) of the stud onto the surface. The joining of the stud is then realized in a joining area corresponding to the clean surface free of contamination. The flange of the stud is arranged facing the clean surface and the joining process (for example through arc-welding) is carried out to join the flange of the stud to the workpiece on the clean surface.

In order to determine the relative position between the stud and the workpiece (or surface of workpiece), it is known to attach a supporting foot to the joining head.

In the present embodiment, the cleaning unit 32 (more particularly the plasma torch 48) comprises a casing 52 connected to the main body, and the casing 52 and the main body 28 both form the supporting foot. Thus, the joining device 10 does not need a further element to act as a supporting foot, since the function is fulfilled by the casing and the main body of the gas protective mouthpiece.

The protective gas supplied inside the internal space for carrying out the joining process and the gas used in the cleaning unit may be the same gas, for example the same inerting gas, such as Argon. Thus, only one gas source is necessary.

More particularly, in an embodiment, the cleaning unit 32 and the protective gas supply unit (with the feed unit 46) can be two different devices. In another embodiment, both the cleaning unit and the protective gas supply unit (with the feed unit 46) can be connected to each other.

## Claims

1. Protective gas mouthpiece (26) for a joining device (10) adapted to carry out a joining process of a stud to a workpiece comprising:
- a main body (28) having:
- an opening (34) extending along a stud axis (X) and adapted to receive a stud, and
- a supporting surface (36) adapted to be arranged on the workpiece (36);
wherein the main body (28) delimits an internal space (40), into which a protective gas can be introduced for carrying out the joining process when the supporting surface rests on the workpiece,
- a channel (30) adapted to feed the protective gas from a feed unit into the internal space,
**characterized in that** the protective gas mouthpiece further comprises a cleaning unit (32) having a plasma torch (48) and adapted to locally supply a plasma jet (50) on the surface of the workpiece, such that the plasma jet is adapted to clean the surface of the workpiece before the joining process, the cleaning unit (32) being attached to the main body (28) and connected to the internal space (40).

2. Protective gas mouthpiece (26) according to claim 1, wherein the plasma torch (48) longitudinally extends along a torch axis (Xt), and wherein the torch axis is arranged inclined with regard to the stud axis.

3. Protective gas mouthpiece (26) according to claim 2, wherein the angle between the torch axis (Xt) and the stud axis (X) is between 30 and 60 degrees.

4. Protective gas mouthpiece (26) according to any of claims 1 to 3, wherein the plasma torch (48) comprises a plurality of plasma tubes, each plasma tube having a plasma outlet tube including a plasma exit aperture, and wherein the plasma exit aperture is connected to the internal space (40) delimited by the main body.

5. Protective gas mouthpiece (26) according to any of claims 1 to 4, comprising a manifold including a plurality of channel extending through the main body for feeding the protective gas into the internal space.

6. Joining device (10) for joining a stud (12) to a workpiece (14) comprising:
- a stud holder (24) operable for moving and holding the stud along a stud axis,
- a protective gas mouthpiece (26) according to any of the claims 1 to 5, wherein the stud holder cooperates with the opening to drive the stud into the internal space to carry out a joining process.

7. Joining device according to claim 6, wherein the joining device further comprises an electric welding power source (20), and wherein the stud is joined to the workpiece through arc welding.

8. Joining device according to claim 6 or claim 7, wherein the cleaning unit (32) comprises a casing (52) connected to the main body (28), and wherein the casing and the main body are used as a supporting foot.

9. Joining device according to any of claims 6 to 8, further comprising a feed unit (46) for feeding the protective gas into the internal space (40).

10. Joining device according to claim 9, wherein the protective gas supplied by the feed unit (46) is the same gas than the gas used in the cleaning unit (32).
